(19) Europäisches Patentamt

European Patent Office

Office européen des brevets

(11) Veröffentlichungsnummer : **0 110 153**
**B1**

(12) # EUROPÄISCHE PATENTSCHRIFT

(45) Veröffentlichungstag der Patentschrift :
16.04.86

(21) Anmeldenummer : 83110795.8

(22) Anmeldetag : 28.10.83

(51) Int. Cl.⁴ : **B 22 D 11/126**, B 23 K 7/02

(54) **Brennschneidmaschine.**

(30) Priorität : **26.11.82 DE 3243810**

(43) Veröffentlichungstag der Anmeldung :
**13.06.84 Patentblatt 84/24**

(45) Bekanntmachung des Hinweises auf die Patenterteilung : **16.04.86 Patentblatt 86/16**

(84) Benannte Vertragsstaaten :
**AT FR GB IT**

(56) Entgegenhaltungen :
**DE-A- 1 936 027**
**DE-A- 1 947 283**
**DE-A- 2 625 758**

(73) Patentinhaber : **MESSER GRIESHEIM GMBH**
**Hanauer Landstrasse 330**
**D-6000 Frankfurt/Main 1 (DE)**

(72) Erfinder : **Schmunck, Karlheinz**
**Mozartstrasse 27**
**D-6052 Mühlheim/Main (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 110 153 B1

## Beschreibung

Die Erfindung betrifft eine Brennschneidmaschine gemäß dem Oberbegriff des Anspruchs 1.

Derartige Brennschneidmaschinen werden in Stranggießanlagen zum Unterteilen von einem oder auch mehreren nebeneinander liegenden Gußsträngen verwendet. Da die Gußstränge aus Bogen-Stranggießanlagen mit einer gewissen Geschwindigkeit ausgefördert und über einen Rollgang weitertransportiert werden, ist während des Schneidvorganges eine Synchronisation der Geschwindigkeiten von Strang- und Brennschneidmaschine erforderlich.

Um diese Synchronisation sicherzustellen, ist es z. B. aus der DE-PS-26 25 758 bekannt, die Brennschneidmaschine an die Seitenflächen des Stranges anzuklemmen.

Die seitlich an den Strang anlegbaren Klemmbacken sind dabei um eine gemeinsame Achse schwenkbar gelagert.

Aufgrund wirtschaftlicher Überlegungen soll der zum Unterteilen des sich kontinuierlich fortbewegenden Stranges benötigte Zeitaufwand klein gehalten werden. Daher wird angestrebt, den Brenner möglichst rasch nach dem erfolgten Anklemmen der Brennschneidmaschine an den Strang in seine seitliche Anschneidstellung zu verschwenken.

Die Anschneidstellung des Brenners ist bei gleichbreiten aber unterschiedlich hohen Strängen jeweils eine andere. Dagegen ist der von den beiden Klemmbacken zwischen sich gebildete Öffnungswinkel und damit die lagemäßige Klemmstellung der Klemmbacken nur von der Breite des Stranges, nicht aber von der Höhe desselben abhängig. Daher ist es nicht möglich, die Schwenkbewegung des Brenners an die der Klemmbacken synchron anzukoppeln, um dadurch zu erreichen, daß der Brenner automatisch nach erfolgter Klemmstellung der Klemmbacken in seiner Anschneidstellung positioniert ist.

Der Erfindung liegt die Aufgabe zugrunde, Brennschneidmaschinen so seitlich an einen Gußstrang anzuklemmen, daß sich der Schneidbrenner im Anklemmzustand der Brennschneidmaschine am Strang, unabhängig von der Höhe des Stranges, automatisch in seiner Anschneidstellung befindet.

Diese Aufgabe wird erfindungsgemäß mit den Merkmalen des kennzeichnenden Teiles des Hauptanspruchs gelöst.

Mit der Weiterbildung der Erfindung gemäß den Merkmalen des Unteranspruchs 2 ist es möglich, die der Erfindung zugrund liegende Aufgabe nicht nur bei Lagerung der Klemmbacken und des Brenners auf einer gemeinsamen sondern auch auf getrennten Wellen zu lösen. Dadurch wird zusätzlich eine konstruktive Vereinfachung der Lagerstellen von Klemmbacken und Brenner erreicht.

Eine sinnvoll praktische Weiterbildung der Erfindung ist im Unteranspruch 3 angegeben.

Die Erfindung ermöglicht es, sofort nach Anklemmung der Brennschneidmaschine an den Strang mit dem Brennschneiden zu beginnen.

Zwei Ausführungsbeispiele der Erfindung sind in der Zeichnung dargestellt und werden im folgenden näher beschrieben.

Es zeigen

Figur 1 eine Frontansicht von zwei unterschiedlich hohen Strängen, an denen auf der rechten Blattseiteeine bekannte und auf der linken Blattseite eine erfindungsgemäße Klemmbacke reibschlüssig anliegt,

Figur 2 eine Frontansicht von zwei unterschiedlich hohen Strängen, an denen eine weitere Ausführungsart von Klemmbacke reibschlüssig anliegt.

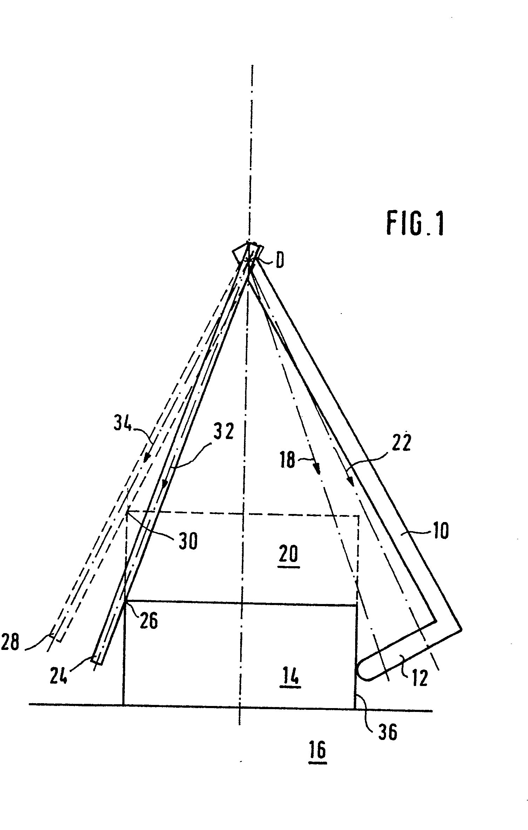

In Fig. 1 ist in der rechten Blatthälfte eine Klemmbacke 10 dargestellt, mit der eine nicht dargestellte Brennschneidmaschine an einen Strang 14 mittels eines an der Klemmbacke 10 befestigten Klemmschuhs 12 angeklemmt ist. Der Strang wird dabei auf einem Rollgang 16 kontinuierlich fortbewegt.

Der Brennschnitt geschieht mit einem Brenner, dessen Längsachse 18 die Anschneidstellung des Brenners bezüglich des Stranges 14 verdeutlicht. Bei einem Strang 20, der die gleiche Breite wie der Strang 14 aufweist, aber von unterschiedlicher — hier größere — Höhe ist, ist die Anschnittstellung des Brenners durch die Lage der Brennerachse 22 dargestellt. Die Klemmstellung der Klemmbacke 10 mit ihrem Klemmschuh 12 ist beim Strang 20 die gleiche wie beim Strang 14. Dies rührt daher, daß der Anlagepunkt des Klemmschuhs 12 unverändert auf der äußeren Seitenfläche 36 des Stranges 14 bzw. 20 liegt.

In der linken Blatthälfte von Fig. 1 ist eine Klemmbacke in einer ersten Lage 24 bzw. zweiten Lage 28 dargestellt, in der sie auf der oberen Längskante 26 des Stranges 14 bzw. auf der oberen Längskante 30 des Stranges 20 reibschlüssig anliegt. Dadurch, daß der jeweilige Anklemmpunkt der Klemmbacke auf der jeweiligen oberen Kante 26, 30 des Stranges 14, 20 liegt, ist die Schwenkstellung der Klemmbacke auch bei gleicher Strangbreite von der Höhe des Stranges 14, 20 abhängig.

Die Lage 24, 28 der Klemmbacke entspricht der Stellung des Brenners in seiner jeweiligen Anschneidstellung, wie die Brennerachsen 32 und 34 verdeutlichen. Beim Verschwenken der Klemmbacke aus ihrer ersten Lage 24 in ihre zweite Lage 28 entspricht die Winkeländerung der Klemmbacke bezüglich des Drehpunktes D dem Winkel, den die Brennerachsen 32 und 34 miteinander einschließen.

Durch eine Kopplung der Bewegungen des Brenners und der Klemmbacke während des Anklemmvorganges wird erreicht, daß zu dem Zeitpunkt, zu dem die Klemmbacke an der Längskante 26 bzw. 30 des Stranges 14 bzw. 20 anliegt, sich auch der Schneidbrenner mit seiner Brennerachse 32 bzw. 34 in seiner Anschneidstellung befindet, so daß unverzüglich mit dem Brennschneiden begonnen werden kann.

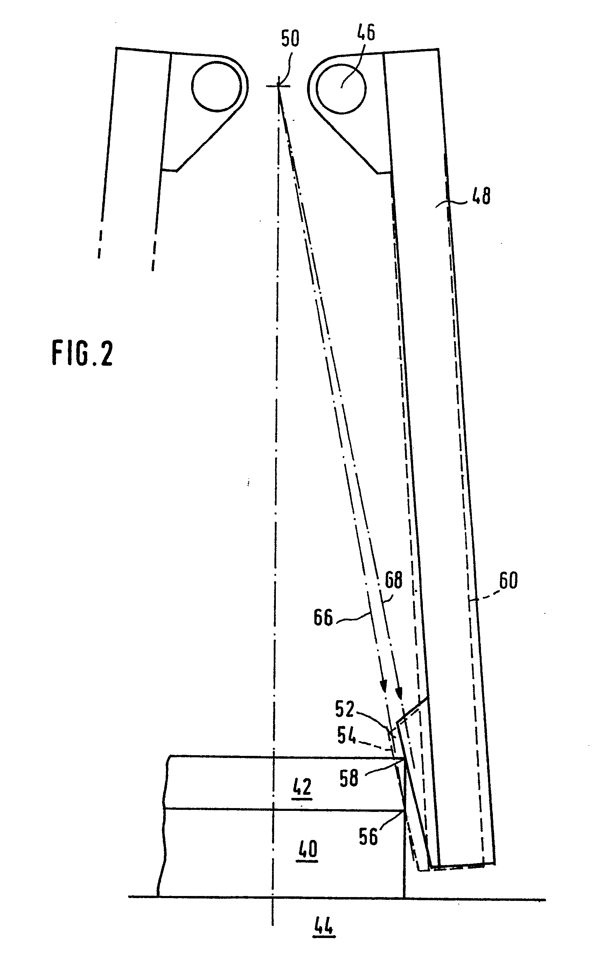

Auch in Fig. 2 sind zwei unterschiedlich hohe, aber gleichbreite Stränge 40 bzw. 42, die auf einem Rollgang 44 liegen, dargestellt.

Während in Fig. 1 die Drehpunkte der Klemmbacken und des Brenners auf einer gemeinsamen Achse liegen, ist bei der Brennschneidmaschine nach Fig. 2 die Achse 46 der Klemmbacke von der Achse 50 des Brenners getrennt angeordnet.

An der Klemmbacke ist an ihrem dem Strang 40 zugekehrten Ende ein Formstück 52 befestigt, das mit seiner Seitenfläche 54 an der oberen Kante 56 des Stranges 40 in einer ersten Lage 48 der Klemmbacke anliegt. An der oberen Kante 58 des Stranges 42 liegt die Klemmbacke über das an ihr befestigte Formstück mit dessen Seitenfläche in einer zweiten Lage 60 an.

Die Anschneidstellung des Brenners ist bei dem Strang 40 eine andere als bei dem Strang 42, wie die Lagen der entsprechenden Brennerlängsachsen 66 und 68 kenntlich machen. Die Anschneidstellung ist dabei jeweils so gewählt, daß die Längsachse des Brenners in dieser Stellung von der äußersten Strangkante, - in normaler Richtung zur Brennerlängsachse gemessen -, einenvorbestimmten Abstand einhält. Dieser Abstand kann im Idealzustand den Wert Null annehmen. Im praktischen Einsatz einer derartigen Brennschneidmaschine ist ein solcher tatsächlicher Abstand aber regelmäßig erwünscht, um unbedingt sicherzustellen, daß der Brenner seine volle Brennleistung beim ersten Auftreffen des Brennstrahles auf dem Strang auch erreicht hat.

Die Anlagepunkte des Stranges an dem Formstück sind bei gleichbreiten Strängen jeweils abhängig von der Höhe des betreffenden Stranges. Die Anlagefläche 54 des Formstückes ist nun so geformt, daß bei gleichbreiten aber unterschiedlich hohen Strängen die Änderung der Winkelstellung der Längsachse des Brenners in seiner Anschneidstellung der Winkelverstellung größenmäßig entspricht, mit der die Klemmbacke ihre Anklemmlage ändert.

Bei Gußsträngen mit Querschnittsdurchmessern a und b, deren im praktischen Hüttenbetrieb vorkommenden Längen innerhalb der Verhältnisse a ≥ 1/2 b und a ⁻ 2b liegen, hat sich herausgestellt, daß die Anlagefläche 54 genügend genau eine Fläche darstellt, die eben ausgebildet ist.

## Patentansprüche

1. Brennschneidmaschine zur Unterteilung eines auf einer Stranggießanlage gegossenen Stranges (14 ; 20 ; 40 ; 42), mit seitlich am Strang angreifenden schwenkbar gelagerten Klemmbacken (10) und mit einem schwenkbar gelagerten Schneidbrenner, wobei eine der Klemmbacken und der Schneidbrenner synchron miteinander verschwenkbar gelagert sind, dadurch gekennzeichnet, daß mindestens eine der Klemmbacken (10) in ihrer Klemmstellung (24, 28, 48, 60) an eine Stranglängskante (26, 30, 56, 58) reibschlüssig anlegbar ist.

2. Brennschneidmaschine nach Anspruch 1, dadurch gekennzeichnet, daß die Lagerstellen der Klemmbacken und des Schneidbrenners auf getrennten Wellen (46, 50) liegen und mindestens eine der Klemmbacken mittels eines an ihr befestigten Formstückes (52) an der Stranglängskante (56, 58) reibschlüssig anlegbar ist, wobei die Anlagefläche (54) des Formstückes (52) so geformt ist, daß in der Anschneidstellung des Brenners der in normaler Richtung von der Strangoberfläche gemessene Abstand der Brennerlängsachse von der Strangoberfläche für alle Strangquerschnitte im wesentlichen gleichgroß ist.

3. Brennschneidmaschine nach Anspruch 2, dadurch gekennzeichnet, daß die Anlagefläche (54) eine ebene Fläche ist.

## Claims

1. Torch cutting device for cutting a cast strand (14, 20, 40, 42) of a strand casting plant with pivoting clamp jaws (10) laterally handling the strand and provided with a pivoting cutting torch being synchronized with one of the clamp jaws and synchronously pivoting with is, characterized by the fact that at least one of the clamp jaws (10) may be put in their clamping position (24, 28, 48, 60) to a longitudinal edge of the strand (26, 30, 56, 58) in friction locking form.

2. Torch cutting device according to claim 1, characterized by the fact that the bearings of the clamp jaws and the cutting torch are located on separate shafts (46, 50) and that at least one of the clamp jaws by means of a formed piece (52) attached to it may be put to the longitudinal edge of the strand (56, 58) in friction locking form, whereby the bearing surface (54) of the formed piece (52) should be formed in that way that in entry position of the torch the distance measured in normal direction of the longitudinal axis of the torch should be mainly equidistant from the strand surface for all cross sections of the strand.

3. Torch cutting device according to claim 2, characterized by the fact that the bearing surface (54) represents a flat surface.

## Revendications

1. Machine à oxycoupage pour trancher un lingot coulé, dans une installation de coulée continue (14, 20, 40, 42), comportant des mâchoires de serrage (10) posées, rotatives, sur le côté du lingot qu'elles attaquent, et avec un brûleur de coupe monté rotatif, une des mâchoires et le brûleur de coupe étant montés pour tourner en synchronisme l'un avec l'autre, machine caractérisée en ce qu'une des mâchoires (10) de serrage peut être posée, dans sa position de serrage (24, 28, 48, 60), sur un bord longitudinal du lingot (26, 30, 56, 58) de façon à pouvoir être entraînée par frottement.

2. Machine à oxycoupage suivant la revendication 1, caractérisée en ce que les points de fixation des mâchoires de serrage et du brûleur de coupe se trouvent sur des axes séparés (46, 50), et qu'au moins une des mâchoires de serrage peut être appuyée de façon à être entraînée par frottement sur le bord du lingot coulé, au moyen d'une pièce moulée posée sur elle, la surface d'appui (54) de la pièce moulée (52) étant d'une forme telle que, si le brûleur est en position de coupe, la distance, mesurée dans la direction normale, qui sépare l'axe longitudinal du brûleur de la surface du lingot est essentiellement de la même grandeur pour toutes les sections transversales du lingot.

3. Machine à oxycoupage suivant la revendication 2, caractérisée ce que la surface d'appui (54) est une surface plane.

FIG.1

FIG.2